# NEUE EUROPÄISCHE PATENTSCHRIFT

(11) **EP 1 959 227 B2**
(45) Veröffentlichungstag und Bekanntmachung des Hinweises auf die Entscheidung über den Einspruch: **01.01.2025**
(45) Hinweis auf die Patenterteilung: 05.09.2012
(21) Anmeldenummer: 07150011.0
(22) Anmeldetag: 13.12.2007
(51) Int. Cl.: G01B 11/24, G01M 17/02, G01B 11/16, G01B 11/02

(54) **Vorrichtung und Verfahren zum Prüfen eines Reifens, insbesondere mittels eines interferometrischen Messverfahrens**
Device and method for testing a tyre, in particular using an interferometric measuring method
Dispositif et procédé destinés à la vérification d'un pneu, en particulier à l'aide d'un procédé de mesure interférométrique

(30) Priorität: 16.02.2007 DE 102007007816; 23.02.2007 DE 102007009040
(43) Veröffentlichungstag der Anmeldung: 20.08.2008
(73) Patentinhaber: Mähner, Bernward, 82205 Gilching (DE); Dengler, Stefan, 75365 Calw-Stammheim (DE)
(72) Erfinder: Mähner, Bernward, 82205 Gilching (DE); Dengler, Stefan, 75365 Calw-Stammheim (DE)
(74) Vertreter: Flügel Preissner Schober Seidel

(56) Entgegenhaltungen:
- EP-A1- 1 473 539
- EP-A1- 1 808 686
- EP-A1- 1 808 686
- EP-A2- 0 915 328
- EP-A2- 1 099 947
- EP-B1- 1 043 578
- DE-U1- 20 314 939
- DE-U1- 20 314 939
- Urteil Bünctespatentgericht vom 15:03.2022 4 Ni 18/09

## Beschreibung

Die vorliegende Erfindung betrifft eine Vorrichtung und ein Verfahren zum Prüfen eines Reifens, insbesondere mittels eines interferometrischen Messverfahrens. Bei dem zu prüfenden Objekt handelt es sich um einen Reifen, jedoch können auch andere Bauteile mit der erfindungsgemäßen Vorrichtung geprüft werden. Das Messverfahren, mit dem der Reifen geprüft wird, ist insbesondere ein interferometrisches Messverfahren. Allerdings ist es auch möglich, andere zerstörungsfreie Messverfahren, wie zum Beispiel Ultraschallprüfung oder Durchstrahlungsprüfung mittels Röntgenstrahlen, durchzuführen. Die Vorrichtung weist eine Messeinrichtung auf, durch die der Reifen zum Erzeugen eines Messergebnisses abgetastet werden kann. Die Vorrichtung ist ferner mit einem Positionierungsmittel versehen, durch das die Messeinrichtung in einer Messposition positioniert und in einer Messrichtung ausgerichtet werden kann.

Reifen oder andere im Einsatz belastete Bauteile werden zur Qualitätskontrolle und zur Reduzierung von Sicherheitsrisiken einer Werkstoffprüfung unterzogen, die es ermöglicht, fehlerhafte Stellen, sogenannte Fehlstellen, zu erkennen. Vor allem dann, wenn es sich um benutzte Reifen handelt, die runderneuert werden sollen, wird in der Regel eine zerstörungsfreie Werkstoffprüfung angewendet, die eine vergleichsweise schnelle Reihenuntersuchung gewährleistet.

Häufig anzutreffen in der industriellen Praxis sind optische Messverfahren, wie zum Beispiel die Holographie oder die auch als Speckle-Pattern-Shearing-Interferometrie bezeichnete Shearographie. Die Shearographie ist ein relatives interferometrisches Messverfahren, das ein Ergebnisbild liefert, welches den Unterschied zwischen zwei zeitlich versetzten Zuständen des Prüfobjekts darstellt. Um das auf Grund der zunehmenden Verbreitung von elektronischen Bildsensoren, wie zum Beispiel CCD- oder CMOS-Sensoren, heutzutage in der Regel digitale Ergebnisbild zu erzeugen, ist es demzufolge erforderlich, den Zustand des Prüfobjekts zwischen zwei Messungen durch Einwirkung einer mechanischen, thermischen oder pneumatischen Kraft zu verändern. Bekannte Vorrichtungen weisen aus diesem Grund eine Drucckammer auf, die entweder evakuiert oder mit Druck beaufschlagt wird, so dass sich das in der Druckkammer befindende Prüfobjekt infolge der Druckänderung verformt und damit von einem ersten Referenzzustand in einen zweiten Messzustand übergeht.

Im Unterschied zu der Holographie ermittelt die Shearographie nicht die Verformung an der Oberfläche eines Prüfobjekts, sondern misst den Gradienten der Verformung. Dies ist darauf zurückzuführen, dass für die Shearographie ein sogenanntes Shearingelement Anwendung findet, bei dem es sich um eine Shearoptik, wie zum Beispiel ein optischer Keil, ein optisches Biprisma oder ein Michelson-Interferometer, handelt, die eine Bildverdopplung erzeugt. Auf Grund des Shearingelements entstehen zwei geringfügig räumlich versetzte Bilder von dem Prüfobjekt, die überlagert werden, um auf Grund der sich auf diese Weise ergebenden Interferenz ein Interferogramm zu erzeugen. Das den Gradienten der Verformung kennzeichnende Shearogramm wird durch Subtraktion der Intensitäten der im Referenzzustand und im Messzustand gewonnenen Interferogramme erzeugt. Das Shearogramm gibt zu erkennen, ob sich die Lage eines Punktes zu einem benachbarten Punkt auf Grund der Verformung des Prüfobjekts geändert hat. Falls ja, dann führt dieser Wegunterschied zu einer lokalen Veränderung der Intensitätsverteilung, die Auskunft über eine Fehlstelle gibt. Interferometrische Messverfahren, die auf dieser Speckle-Interferomertrie beruhen, werden in der DE 42 31 578 A1 und EP 1 014 036 B1 beschrieben.

Die zum Prüfen eines Prüfobjekts mittels eines interferometrischen Messverfahrens eingesetzten Vorrichtungen sind in der Regel mit wenigstens einem Messkopf versehen, der eine Beleuchtungseinheit und eine Bildaufnahmeeinheit aufweist. Die Beleuchtungseinheit wird häufig durch einen kohärentes Licht emittierenden Laser oder Laserdioden gebildet. Die Bildaufnahmeeinheit ist üblicherweise eine Kamera, die mit einem Bildsensor, das heißt einem lichtempfindlichen Halbleitersensor, zum Beispiel einem CCD- oder CMOS-Sensor, versehen ist. Um ein aussagekräftiges Messergebnis zu erhalten, ist es erforderlich, das Gesichtsfeld der Kamera und den zu prüfenden Abschnitt des Prüfobjekts aufeinander abzustimmen. Gewöhnlich erfolgt eine solche Abstimmung dadurch, dass der Messkopf in einer Messposition positioniert und in einer Messrichtung ausgerichtet wird, die sicherstellen, dass einerseits der gewählte Messabschnitt des Prüfobjekts vollständig von dem Gesichtswinkel der Kamera erfasst wird und damit im Gesichtsfeld der Kamera liegt und andererseits aufeinander folgende Messabschnitte sich ausreichend überlappen, um eine lückenlose Prüfung zu ermöglichen. Die Messposition und die Messrichtung des Messkopfs hängen von den Abmessungen des Prüfobjekts ab. Demzufolge ist aus der EP 1 284 409 A1 eine Vorrichtung bekannt, die es ermöglicht, das Prüfobjekt optisch, beispielsweise mittels sogenannter Lichtschnitte, zu vermessen, um in Abhängigkeit von den auf diese Weise gewonnenen Daten den Messkopf zu positionieren und auszurichten.

Ein Reifenprüfgerät, bei dem ein zu prüfender Reifen ohne Felge und Radscheibe in einer liegenden Position in einer Druckkammer angeordnet wird, offenbart die EP 1 043 578 B1. Das Reifenprüfgerät weist mehrere Messköpfe auf, die sich in einem vorgegebenen Abstand von der Innenfläche des Reifens positionieren lassen, um den Unterbau des Reifens, das heißt die Karkasse, einen häufig zwischen der Karkasse und der Lauffläche angeordneten Gürtel sowie die Seitenwand des Reifens von innen zu prüfen. Die Messköpfe weisen jeweils eine Beleuchtungseinheit und eine Bildaufnahmeeinheit auf und sind in einem Winkel zueinander angeordnet, so dass unterschiedliche Abschnitte des Reifens gleichzeitig geprüft werden können, um eine vergleichsweise schnelle Prüfung zu erreichen.

Die Messköpfe sind mit einem Positionierungsmittel verbunden, das es ermöglicht, die Messköpfe von einer sich außerhalb des Reifens befindenden und somit einen Wechsel der zu prüfenden Reifen gewährleistenden Parkposition in eine sich innerhalb des Reifens befindende Messposition zu bewegen. Zu diesem Zweck weist das Positionierungsmittel einen in der axialen Richtung des Reifens verstellbaren Arm auf, an dem die Messköpfe angeordnet sind. Um die Messköpfe in der erforderlichen Messposition positionieren und in der gewünschten Messrichtung ausrichten zu können, sind die Messköpfe in radialer Richtung des Reifens verstellbar und um eine Schwenkachse drehbar an dem Arm angeordnet.

Das bekannte Reifenprüfgerät ist mit dem Nachteil verbunden, dass aufgrund der Anordnung der Messköpfe in der sich innerhalb des Reifens befindenden Messposition nur Reifen geprüft werden können, die einen vergleichsweise großen Innendurchmesser haben. Darüber hinaus hat sich die um eine Schwenkachse drehbare Anordnung der Messköpfe, die zwingend erforderlich ist, um die Innenfläche des Reifens vollständig prüfen zu können, als nachteilig erwiesen. Denn die schwenkbare Anordnung der Messköpfe erfordert einen hohen mechanischen und steuerungstechnischen Aufwand, der mit einer kostenintensiven Fertigung einhergeht.

Ein Verfahren und eine Vorrichtung zur Messung der Form und/oder der Verformung eines Objektes, bei dem es sich um einen Reifen handeln kann, wird in EP 1 473 539 A1 beschrieben. Um bei Objekten mit dunklen und/oder stark reflektierenden Oberflächen sowohl in den dunklen als auch in den hellen Bildbereichen sinnvoll messen zu können, wird eine erste Aufnahme mit einer ersten Einstellung, die an einen ersten Bildbereich angepasst ist, und eine Zweitaufnahme mit einer zweiten Einstellung, die an einen zweiten Bildbereich angepasst ist, mittels einer Kamera gemacht. Beide Aufnahmen werden anschließend kombiniert.

Darüber hinaus ist aus EP 1 099 947 A2 ein Verfahren und eine Vorrichtung zur Durchführung einer optischen Reifenprüfung bekannt. Die Schlüsselbereiche eines zu prüfenden Reifens, insbesondere der Laufflächenabschnitt, die Schultern und die Wülste auf beiden Seitenwänden, werden in zwei Prüfdurchläufen mittels zwei höhenverstellbaren Kameras jeweils entlang des gesamten Umfangs geprüft. In einem ersten Prüfdurchlauf prüft eine obere Kamera den oberen Schulter-/Seitenwandbereich von außen und eine untere Kamera den inneren Schulterbereich bis zum Laufflächenabschnitt. Anschließend wird die Messposition der Kameras geändert, und in einem zweiten Prüfdurchlauf prüft die obere Kamera die innere untere Schulter und die untere Kamera den unteren Wulstbereich. Um eine kurze Prüfzeit zu erzielen, können auch vier jeweils um 90° versetzt zueinander angeordnete Kameras mit einem Gesichtswinkel von jeweils 45° vorgesehen werden.

Eine Vorrichtung für die Beurteilung der Konfiguration eines Reifens und ein Reifenklassifizierungsverfahren werden in EP 0 915 328 A2 beschrieben.

Weiterhin ist aus EP 1 808 686 A1 ein Prüfgerät für hohle Prüfobjekte, wie beispielsweise Reifen, Rohre oder Tanks, bekannt. Das Prüfgerät umfasst einen Verschluss, der dazu dient, eine Öffnung des Prüfobjekts zu verschließen. Das Prüfobjekt umfasst ferner eine Prüfanordnung, die im Innern des Prüfobjekts angeordnet ist, um das Prüfobjekt zu prüfen. Der Verschluss ist mit einer Druckdurchführung luftdicht verbunden. Die Druckdurchführung dient dazu, in dem durch den Verschluss gebildeten Hohlraum einen Unterdruck oder einen Überdruck zu erzeugen. Die Druckbeaufschlagung eines Reifens von innen macht das Vorsehen einer Vakuumkammer entbehrlich.

Der Erfindung liegt die **Aufgabe** zugrunde, eine Vorrichtung und eine Prüfanordnung zum Prüfen eines Reifens zu schaffen, die eine schnelle und vollständige Prüfung des Reifens ermöglichen.

Diese Aufgabe wird durch eine Vorrichtung gemäß Anspruch 1 und eine Prüfanordnung gemäß Anspruch 20 gelöst. Bevorzugte Ausgestaltungen der Erfindung werden in den Ansprüchen 2 bis 19 definiert.

Die erfindungsgemäße Vorrichtung zum Prüfen eines Reifens weist eine Messeinrichtung auf, durch die der Reifen zum Erzeugen eines Messergebnisses abtastbar ist. Die Messeinrichtung weist wenigstens drei Messköpfe auf, die zum Beispiel eine Ausgestaltung haben können, wie sie in der EP 1 014 036 B1 beschrieben ist, um den Reifen mittels eines interferometrischen Messverfahrens zu prüfen. Grundsätzlich ist es auch möglich, dass die Messköpfe eine Ausgestaltung haben, die es ermöglicht, andere zerstörungsfreie Messverfahren, wie zum Beispiel Ultraschallprüfung oder Durchstrahlungsprüfung mittels Röntgenstrahlen, durchzuführen. Die erfindungsgemäße Vorrichtung ist ferner mit einem Positionierungsmittel versehen, durch das die Messköpfe in ihrer jeweiligen Messposition positioniert und in ihrer jeweiligen Messrichtung ausgerichtet werden können.

Das Positionierungsmittel ist so ausgestaltet, dass wenigstens zwei der Messköpfe der Messeinrichtung in Messrichtungen ausgerichtet werden können, die es ermöglichen, die Außenfläche der Seitenwände abzutasten. Das Positionierungsmittel ist außerdem so ausgestaltet, dass wenigstens einer der Messköpfe der Messeinrichtung in einer Messrichtung ausgerichtet werden kann, die es ermöglicht, die Innenfläche des Reifens, und zwar zumindest im Bereich des Laufflächenabschnitts, abzutasten.

Eine schnelle und vollständige Prüfung des Reifens wird ermöglicht, wenn die Prüfvorrichtung wenigstens drei Messköpfe aufweist. Der erste Messkopf und der zweite Messkopf werden so positioniert und ausgerichtet, dass die Außenfläche der Seitenwände abgetastet werden kann. Der dritte Messkopf wird hingegen so positioniert und ausgerichtet, dass sich die Innenfläche von zumindest dem Laufflächenabschnitt abtasten lässt. In einem ersten Prüfdurchlauf wird der Reifen relativ zu den Messköpfen um die Rotationsachse intermittierend gedreht und von den Messköpfen abschnittsweise abgetastet. Der erste Messkopf tastet dabei eine Hälfte der Messabschnitte auf der Außenfläche der ersten Seitenwand ab, wohingegen der zweite Messkopf die andere Hälfte der Messabschnitte auf der Außenfläche der ersten Seitenwand abtastet. Der dritte Messkopf tastet eine Hälfte der Messabschnitte auf der Innenfläche ab. Nach dem ersten Prüfdurchlauf wird der Reifen gewendet und anschließend in einem zweiten Prüfdurchlauf erneut relativ zu den Messköpfen um die Rotationsachse intermittierend gedreht und von den Messköpfen abschnittsweise abgetastet. Der erste Messkopf tastet dann eine Hälfte der Messabschnitte auf der Außenfläche der zweiten Seitenwand ab, wohingegen der zweite Messkopf die andere Hälfte der Messabschnitte auf der Außenfläche der zweiten Seitenwand abtastet. Der dritte Messkopf tastet die verbleibende Hälfte der Messabschnitte auf der Innenfläche ab.

Demzufolge sind nach dem zweiten Prüfdurchlauf die Außenfläche von sowohl der ersten Seitenwand als auch der zweiten Seitenwand sowie die Innenfläche von zumindest dem Laufflächenabschnitt komplett abgetastet und der Reifen damit vollständig geprüft. Die Erfindung macht sich die Erkenntnis zu eigen, eine vollständige Prüfung des Reifens, das heißt eine sogenannte bead-to-bead-Prüfung, dadurch zu erreichen, dass die Seitenwände von außen und der Laufflächenabschnitt von innen geprüft wird. Die Seitenwände werden dabei mit Hilfe von zwei Messköpfen abgetastet, wohingegen für das Abtasten des Laufflächenabschnitts ein einziger Messkopf ausreichend ist. Die Erfindung ist von besonderer Bedeutung, wenn der Reifen in einer liegenden Position geprüft wird und demzufolge ein Wenden des Reifens unerlässlich ist, um die während des ersten Prüfdurchlaufs untenliegende Seitenwand in dem zweiten Prüfdurchlauf von außen prüfen zu können. Sind, wie in solch einem Fall, zwei Prüfdurchläufe notwendig, dann kommt in besonderem Maße die Aufteilung der Prüfung des Laufflächenabschnitts auf die zwei Prüfdurchläufe zum Tragen. Denn durch diese Aufteilung kann in der Zeitspanne, während der die beiden Messköpfe die Seitenwände von außen prüfen, der Laufflächenabschnitt mit nur einem einzigen Messkopf vollständig geprüft werden. Im Unterschied zum Stand der Technik, wie er beispielsweise aus der EP 1 043 578 B1 bekannt ist, können mit der erfindungsgemäßen Vorrichtung somit auch Reifen mit einem vergleichsweise geringen Innendurchmesser geprüft werden.

Wenngleich sich demzufolge eine Anzahl von drei Messköpfen für die Prüfung der meisten Reifentypen als optimal erweist, kann die erfindungsgemä-ße Vorrichtung bei Bedarf auch mit mehr als drei Messköpfen bestückt werden. Werden zum Beispiel vergleichsweise große Reifen, wie etwa so genannte Off-The-Road (OTR)-Reifen, geprüft, dann kann es sich als zweckmäßig erweisen, die Seitenwände nicht mit zwei, sondern mit vier oder mehr Messköpfen von außen zu prüfen, um eine kurze Prüfdauer zu erreichen. Der Vorteil, die zwei, sich durch ein Wenden des Reifens ergebenden Prüfdurchläufe auszunutzen, um die Prüfung des Laufflächenabschnitts auf die beiden Prüfdurchläufe zu verteilen, ergibt sich immer dann, wenn die Anordnung der Messköpfe, welche die Seitenwände von außen prüfen, und die Anordnung der Messköpfe, welche den Laufflächenabschnitt von innen prüfen, so gewählt werden, dass während eines Prüfdurchlaufs die Außenfläche der Seitenwände vollständig und die Innenfläche des Laufflächenabschnitts zur Hälfte geprüft werden.

Ein weiterer Grund für das Vorsehen von mehr als drei Messköpfen kann darin bestehen, Redundanz zu schaffen, um eine ausfallsichere Ausgestaltung zu erreichen. Darüber hinaus ist es mitunter ausreichend, wenn der Reifen nicht vollständig geprüft wird, sondern lediglich im Bereich des Laufflächenabschnitts. Um in diesem Fall eine kurze Prüfdauer sicherzustellen, umfasst die Messeinrichtung in einer bevorzugten Ausgestaltung der erfindungsgemäßen Vorrichtung einen vierten Messkopf, der zum Abtasten der Innenfläche von zumindest dem Laufflächenabschnitt in einer vierten Messrichtung ausgerichtet ist. Die vierte Messrichtung und die dritte Messrichtung, in welcher der dritte Messkopf ausgerichtet ist, verlaufen bevorzugt in einer radialen Richtung des Reifens und sind zu dem vorgenannten Zweck vorzugsweise entgegengesetzt orientiert. Je nach Anwendungsfall ist es allerdings auch möglich, dass sich die dritte und vierte Messrichtung geneigt zu der Reifenmittenebene erstreckt, die bei einem symmetrischen Aufbau des Reifens dessen Symmetrieebene entspricht.

Die erste Messrichtung und die zweite Messrichtung verlaufen bevorzugt in einer axialen Richtung des Reifens. Je nach Anwendungsfall ist es allerdings auch möglich, dass die erste und zweite Messrichtung geneigt zu einer sich in der axialen Richtung erstreckenden Axialebene verlaufen.

Wenn der Reifen in einer liegende Position geprüft wird., verläuft die axiale Richtung vertikal, wohingegen die radiale Richtung horizontal verläuft.

In einer bevorzugten Ausgestaltung der erfindungsgemäßen Vorrichtung ist zumindest einer der Messköpfe in Bezug auf die Messrichtung starr angeordnet. Vorzugsweise sind alle Messköpfe in Bezug auf ihre jeweilige Messrichtung starr angeordnet. Die starre Anordnung der Messköpfe, das heißt die fehlende Möglichkeit, die Messköpfe in der Messposition um eine orthogonal zu der Messrichtung verlaufende Schwenkachse zu drehen, bietet den Vorteil einer einfachen und damit kostengünstigen Ausgestaltung. Im Unterschied zum Stand der Technik, wie er zum Beispiel aus der EP 1 043 578 B1 bekannt ist, bietet die starre Anordnung der Messköpfe darüber hinaus den Vorteil einer verschleiß- und wartungsarmen Ausgestaltung.

In einer alternativen Ausgestaltung der erfindungsgemäßen Vorrichtung ist zumindest einer der Messköpfe, vorzugsweise alle Messköpfe, um eine orthogonal zu der Messrichtung verlaufende Schwenkachse drehbar. In Hinsicht auf eine einfache und universelle Ausgestaltung hat es sich als vorteilhaft und ausreichend erwiesen, wenn nur einer der Messköpfe um die Schwenkachse drehbar ist.

In einer bevorzugten Ausgestaltung der erfindungsgemäßen Vorrichtung kann der Messkopf zwischen einer ersten Messposition und einer zweiten Messposition geschwenkt werden. Um eine präzise und reproduzierbare Schwenkbewegung zu erreichen, ist der Messkopf vorteilhafterweise entgegen der Wirkung einer beispielsweise von einem Federelement hervorgerufenen Rückstellkraft von der ersten Messposition in die zweite Messposition schwenkbar. Die Bewegung von der ersten Messposition in die zweite Messposition kann zum Beispiel durch ein pneumatisch betätigtes Stellglied erzeugt werden.

Bevorzugt ist der Messkopf in der ersten Messposition in einer sich im Wesentlichen in der axialen Richtung des Reifens erstreckenden Messrichtung und in der zweiten Messposition in einer sich im Wesentlichen in der radialen Richtung des Reifens erstreckenden Messrichtung ausgerichtet. In der ersten Messposition kann der Messkopf eingesetzt werden, um die Seitenwände des Reifens von außen zu prüfen. In der zweiten Messposition kann der Messkopf eingesetzt werden, um den Laufflächenabschnitt des Reifens von innen zu prüfen. Handelt es sich bei dem schwenkbar angeordneten Messkopf um den ersten Messkopf oder den zweiten Messkopf, dann kann dieser in der zweiten Messposition zusammen mit dem dritten Messkopf den Laufflächenabschnitt in einer vergleichsweise kurzen Prüfdauer abtasten, wenn keine vollständige Prüfung des Reifens erforderlich ist. Die schwenkbare Anordnung von nur einem der Messköpfe gewährleistet somit eine universelle Verwendbarkeit der erfindungsgemäßen Vorrichtung.

In einer weiteren bevorzugten Ausgestaltung der erfindungsgemäßen Vorrichtung ist der Messkopf derart schwenkbar, dass er in der ersten Messposition in einer sich in der radialen Richtung des Reifens erstreckenden Messrichtung und in der zweiten Messposition in einer gegenüber dieser radialen Messrichtung um einen Verstellwinkel geneigten Messrichtung ausgerichtet ist. Eine solche Ausgestaltung bietet sich vor allem dann an, wenn die zu prüfenden Reifen über eine vergleichsweise große Breite verfügen und infolgedessen der Laufflächenabschnitt nicht vollständig von dem Gesichtswinkel des Messkopfs erfasst wird. Auf Grund der Drehung des Messkopfs um den Verstellwinkel ist es möglich, einen so genannten Split-Crown-Shot durchzuführen, das heißt den Messkopf so auszurichten, dass ein Teil des Laufflächenabschnitts einschließlich des sich im Übergang zu der Seitenwand befindenden Schulterabschnitts in dem Gesichtswinkel des Messkopfs liegt. Zu diesem Zweck hat es sich als vorteilhaft erwiesen, wenn der Verstellwinkel, bezogen auf die Reifenmittenebene, zwischen 0° und ± 30°, vorzugsweise zwischen 0° und ± 15°, beträgt. Wird die Innenfläche des Reifens mittels eines Split-Crown-Shot geprüft, dann lassen sich die Vorteile des erfindungsgemäßen Verfahrens erreichen, wenn die Innenfläche des Reifens von zwei Messköpfen simultan abgetastet wird.

Die erfindungsgemäße Vorrichtung weist eine Druckkammer auf, in welcher der zu prüfende Reifen einem vorgegebenen Druck ausgesetzt werden kann. Die Druckkammer ermöglicht, ein interferometrisches, insbesondere shearographisches, Messverfahren praxisgerecht durchzuführen.

Die erfindungsgemäße Vorrichtung weist außerdem ein Untergestell auf, auf dem der Reifen während der Prüfung lagerbar ist. Das Untergestell kann zudem dazu dienen, auftretende Schwingungen, wie zum Beispiel Luft- oder Körperschall, die das Messergebnis verfälschten, zu minimieren. Zweckmäßigerweise ist nicht nur das Positionierungsmittel sondern auch die Drucckammer an dem Untergestell abgestützt.

Erfindungsgemäß sind die Messköpfe durch das Positionierungsmittel in der axialen Richtung und in der radialen Richtung bewegbar. In diesem Zusammenhang hat es sich als vorteilhaft erwiesen, wenn das Positionierungsmittel erfindungsgemäß wenigstens eine axiale Verstelleinheit, durch die der Messkopf in der axialen Richtung bewegbar ist, und wenigstens eine radiale Verstelleinheit, durch die der Messkopf in der radialen Richtung bewegbar ist, aufweist. Zweckmäßigerweise sind jedem der Messköpfe eine axiale Verstelleinheit und eine radiale Verstelleinheit zugeordnet, so dass die Messköpfe unabhängig voneinander in ihrer jeweiligen Messposition positioniert und in ihrer jeweiligen Messrichtung ausgerichtet werden können. Die Verstelleinheiten sind beispielsweise als Linearführung oder Linearmotor ausgestaltet und können miteinander gekoppelt sein. Eine einfache und kostengünstige Ausgestaltung ergibt sich dann, wenn wenigstens zwei radiale Verstelleinheiten und/oder wenigstens zwei axiale Verstelleinheiten jeweils miteinander gekoppelt sind, und zwar derart, dass sie durch einen gemeinsamen Antrieb angetrieben werden.

Erfindungsgemäß ist die Messeinrichtung relativ zu dem Reifen um eine sich in der axialen Richtung des Reifens erstreckende Rotationsachse oder Rollachse drehbar ist, um auf diese Weise den Reifen in Umfangsrichtung vollständig abzutasten. In diesem Zusammenhang ist es ferner vorteilhaft, das Untergestell mit einer Drehvorrichtung zu versehen, durch die der Reifen um die Rotationsachse gedreht werden kann. Alternativ oder zusätzlich kann die Relativbewegung von Reifen und Messeinrichtung durch eine drehbare Ausgestaltung des Positionierungsmittels erreicht werden. Letztere Ausgestaltung ist jedoch mit einem hohen technischen Aufwand und enormen Platzbedarf verbunden.

Um ein interferometrisches, insbesondere shearographisches, Messverfahren durchzuführen, umfassen die Messköpfe vorteilhafterweise jeweils eine Beleuchtungseinheit, durch die der zu prüfende Reifen beleuchtet wird, ein Shearingelement, durch das die von dem Reifen rückgestreuten Lichtbündel zur Interferenz gebracht werden, und einen elektronischen Bildsensor, der im Strahlengang des Shearingelements angeordnet ist und die interferierenden Lichtbündel aufnimmt. Die zum Beispiel durch Laserdioden gebildete Beleuchtungseinheit kann entweder integraler Bestandteil der Messköpfe oder von diesen separat ausgebildet sein.

In Hinsicht auf eine praxisgerechte Ausgestaltung ist es außerdem von Vorteil, wenn die erfindungsgemäße Vorrichtung eine Steuer- und Auswerteeinrichtung aufweist, mittels der die Messeinrichtung und/oder das Positionierungsmittel und/oder die Drehvorrichtung und/oder der in der Druckkammer herrschende Druck gesteuert und das erzielte Messergebnis ausgewertet werden können. In diesem Zusammenhang hat es sich zudem als vorteilhaft erwiesen, wenn die Steuer- und Auswerteinrichtung eine Bildfangschaltung, das heißt einen so genannten Frame- oder Videograbber, aufweist, durch welche die von dem Bildsensor der Messköpfe aufgenommenen Bilder eingelesen werden. Die Bildfangschaltung ist zweckmäßigerweise mehrkanalig ausgestaltet, um die Bilder der Messköpfe simultan einlesen zu können. Eine besonders kostengünstige Ausgestaltung ergibt sich dann, wenn die Messeinrichtung über drei Messköpfe verfügt und für das simultane Einlesen der Bilder demzufolge eine dreikanalige Bildfangschaltung erforderlich ist. Denn dreikanalige Framegrabber werden für die Verarbeitung von Videosignalen herkömmlicher Farbkameras eingesetzt und sind daher günstig am Markt zu erwerben. Je nach Anwendungsfall kann es allerdings sinnvoll sein, die von dem Bildsensor erzeugten Bildsignale nicht simultan, sondern sequenziell einzuziehen, um beispielsweise bei einer großen Anzahl an Messköpfen eine einfache und kostengünstige Bildfangschaltung verwenden zu können.

In einer bevorzugten Ausgestaltung werden die Seitenwände und der Laufflächenabschnitt jeweils in eine gerade Anzahl an Messabschnitten gegliedert. Als für die meisten Reifentypen geeignet hat sich eine Gliederung in acht Messabschnitte erwiesen.

In einer besonders vorteilhaften Ausgestaltung werden der erste Prüfdurchlauf auf einer ersten Prüfvorrichtung und der zweite Prüfdurchlauf auf einer zweiten Prüfvorrichtung durchgeführt. Eine solche Verfahrensführung ermöglicht eine außerordentlich schnelle Reihenuntersuchung.

In einer weiteren bevorzugten Ausgestaltung werden die Messabschnitte von den Messköpfen simultan abgetastet, wobei der Reifen zweckmäßigerweise in einer Druckkammer abgeordnet und einem vorgegebenen Druck ausgesetzt wird, so dass die Messköpfe eine sich auf Grund einer Änderung des Drucks in der Druckkammer ergebende Verformung des Reifens interferometrisch erfassen können.

Einzelheiten und weitere Vorteile der Erfindung ergeben sich aus der nachfolgenden Beschreibung von bevorzugten Ausführungsbeispielen. In den die Ausführungsbeispiele lediglich schematisch darstellenden Zeichnungen veranschaulichen im Einzelnen:
- Fig. 1a: eine Seitenansicht einer Vorrichtung zum Prüfen eines Reifens in einer ersten Ausführungsform, die drei Messköpfe aufweist;
- Fig. 1b: einen Querschnitt durch einen Reifen;
- Fig. 1c: eine Darstellung der von den Messköpfen der Prüfvorrichtung gemäß Fig. 1a geprüften Messabschnitte des Reifens;
- Fig. 2a: eine Prüfanordnung, die zwei Prüfvorrichtungen gemäß Fig. 1a und eine Wendevorrichtung umfasst;
- Fig. 2b: eine Darstellung der von den Prüfvorrichtungen gemäß Fig. 2a geprüften Messabschnitte des Reifens;
- Fig. 3a: eine Seitenansicht einer Prüfvorrichtung in einer zweiten Ausführungsform, die einen schwenkbar angeordneten Messkopf in einer ersten Messposition zeigt;
- Fig. 3b: eine Seitenansicht gemäß Fig. 3a, die den schwenkbar angeordneten Messkopf in einer zweiten Messposition zeigt;
- Fig. 4: eine Seitenansicht der Prüfvorrichtung in einer dritten Ausführungsform, die vier Messköpfe umfasst;
- Fig. 5a: eine Seitenansicht der Prüfvorrichtung in einer vierten Ausführungsform, die zwei in Bezug auf die Messrichtung starre und zwei schwenkbar angeordnete Messköpfe umfasst, und
- Fig. 5b: eine Seitenansicht gemäß Fig. 5a, welche die schwenkbar angeordneten Messköpfe in einer um einen Verstellwinkel gedrehten Messrichtung zeigt.

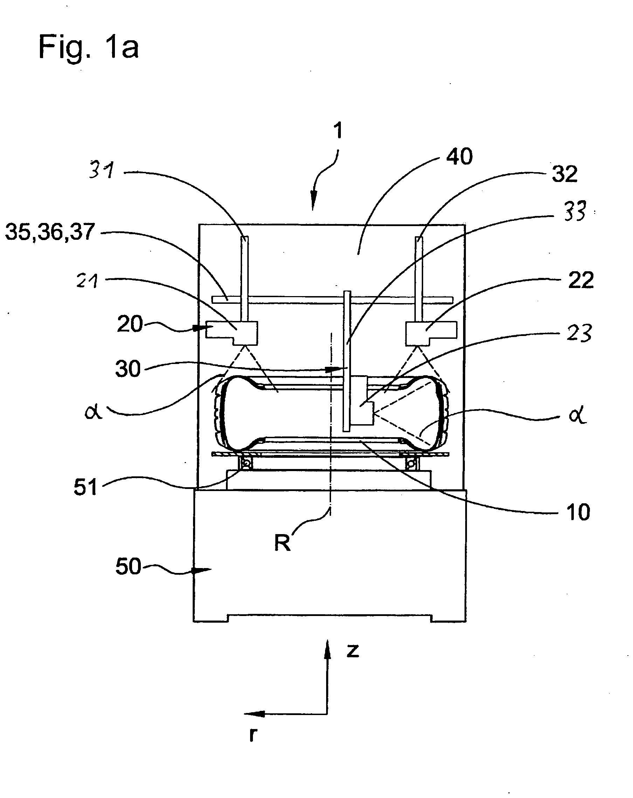

Die in Fig. 1a dargestellte Vorrichtung 1 dient zum Prüfen eines Reifens 10 mittels eines interferometrischen Messverfahrens. Die Prüfvorrichtung 1 weist eine Messeinrichtung 20 auf, durch die der Reifen 10 zum Erzeugen eines Messergebnisses abgetastet werden kann. Die Messeinrichtung 20 umfasst drei Messköpfe 21, 22, 23, die jeweils eine Ausgestaltung haben, wie sie aus der EP 1 014 036 B1 bekannt ist, um den Reifen 10 mittels eines interferometrischen, insbesondere shearographischen, Messverfahrens zu prüfen. Demnach verfügen die Messköpfe 21, 22, 23 jeweils über eine Beleuchtungseinheit, durch die sich der Reifen 10 beleuchten lässt und die zum Beispiel durch eine Vielzahl an Laserdioden gebildet wird. Die Messköpfe 21, 22, 23 weisen ferner jeweils ein Shearingelement auf, durch das die von dem Reifen 10 gestreuten Lichtbündel zur Interferenz gebracht werden. Das Shearingelement setzt sich zum Beispiel aus einem Strahlteiler, einem bewegbaren Spiegel und einem stationären Spiegel zusammen. Weiterhin weisen die Messköpfe 21, 22, 23 jeweils eine Kamera auf, die mit einem elektronischen Bildsensor, zum Beispiel einem CCD- oder CMOS-Sensor, versehen ist. Der Bildsensor ist im Strahlengang des Shearingelements angeordnet und dient dazu, die interferierenden Lichtbündel aufzunehmen.

Wie Fig. 1a ferner zu erkennen gibt, weist die Prüfvorrichtung 1 ein Positionierungsmittel 30 auf, durch das die Messköpfe 21, 22, 23 jeweils in einer Messposition positioniert und in einer Messrichtung ausgerichtet werden können. Das Positionierungsmittel 30 umfasst zu diesem Zweck axiale Verstelleinheiten 31, 32, 33, durch welche die Messköpfe 21, 22, 23 jeweils in einer axialen Richtung z des Reifens 10 bewegt werden können. Außerdem umfasst das Positionierungsmittel 30 radiale Verstelleinheiten 35, 36, 37, durch welche die Messköpfe 21, 22, 23 jeweils in einer radialen Richtung r des Reifens 10, die sich orthogonal zur axialen Richtung z erstreckt, bewegt werden können. Sowohl die axialen Verstelleinheiten 31, 32, 33 als auch die radialen Verstelleinheiten 35, 36, 37 sind zum Beispiel als Linearführung oder Linearmotor ausgestaltet und ermöglichen demzufolge eine geradlinige Bewegung der Messköpfe 21, 22, 23 in der axialen Richtung z und der radialen Richtung r. Jeweils eine axiale Verstelleinheit 31, 32, 33 und eine radiale Verstelleinheit 35, 36, 37 sind einem Messkopf 21, 22, 23 zugeordnet und miteinander gekoppelt. So sind zum Beispiel die dem Messkopf 21 zugeordneten Verstelleinheiten 31, 35 miteinander gekoppelt, und zwar derart, dass sich die Verstelleinheit 31 durch die Verstelleinheit 35 in radialer Richtung r bewegen lässt. Darüber hinaus können auch unterschiedlichen Messköpfen 21, 22, 23 zugeordnete Verstelleinheiten 31, 32, 33, 35, 36, 37 miteinander gekoppelt sein, um insbesondere die Anzahl der Antriebe zu reduzieren und damit eine kostengünstige Ausgestaltung sicherzustellen. So können zum Beispiel die axialen Verstelleinheiten 31, 32 miteinander gekoppelt sein, um durch einen gemeinsamen Antrieb in der axialen Richtung z bewegt zu werden.

Weiterhin weist die Prüfvorrichtung 1 eine Druckkammer 40 auf, in welcher der Reifen 10 einem vorgegebenen Druck ausgesetzt werden kann. Der in der Druckkammer 40 herrschende Druck kann ein Überdruck oder ein Unterdruck sein. Ein nicht dargestelltes Sicherheitsventil verhindert, dass in der Druckkammer 40 ein übermäßiger, eine Verformung oder Beschädigung der Druckkammer 40 hervorrufender Überdruck oder Unterdruck auftreten kann. Im Zusammenhang mit einem shearographischen Messverfahren hat es sich als zweckmäßig erwiesen, als Referenzzustand den Atmosphärendruck zu wählen und als Messzustand einen Unterdruck vorzusehen, auf den die Druckkammer 40 evakuiert wird.

Die Vorrichtung weist überdies ein Untergestell 50 auf, auf dem der Reifen 10 während der Prüfung gelagert wird und an dem das Positionierungsmittel 30 abgestützt ist. Der Reifen 10 ist, wie in Fig. 1a zu erkennen ist, liegend gelagert. Demnach verläuft die axiale Richtung z vertikal und die radiale Richtung r horizontal. Das Untergestell 50 ist mit einer Drehvorrichtung 51 versehen, die eine Rotation des Reifens 10 um eine Rotationsachse R ermöglicht. Die Rotationsachse R erstreckt sich in der axialen Richtung z.

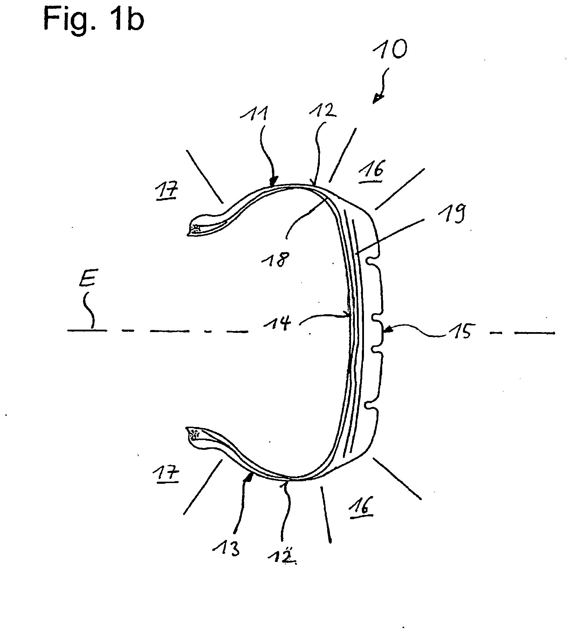

Wie Fig. 1b zu erkennen gibt, weist ein Reifen 10 üblicherweise zwei Seitenwände 11, 13 und einen die Seitenwände 11, 13 miteinander verbindenden Laufflächenabschnitt 15 auf. Die Übergangsbereiche von dem Laufflächenabschnitt 15 zu den Seitenwänden 11, 13 wird im Allgemeinen als Schulterabschnitt oder Schulter 16 bezeichnet. Das freie, häufig verdickte Ende der Seitenwände 11, 13 sorgt für eine feste Verbindung zwischen dem Reifen 10 und der Felge eines Rads und wird in der Regel als Wulstabschnitt oder Wulst 17 bezeichnet. Der tragende Unterbau des Reifens 10 ist die Karkasse 18, die im Allgemeinen aus einer oder mehreren in Gummi eingebetteten Schichten aus einem Kunstfasern oder Stahlcorde umfassenden Gewebe besteht. Die Karkasse 18 ist der entscheidende Festigkeitsträger des Reifens 10 und wird durch den sich im Laufflächenabschnitt 15 befindenden Gürtel 19 komplettiert.

Um den Reifen 10 mittels eines shearographischen Messverfahrens zu prüfen, werden zunächst die Messköpfe 21, 22, 23 mittels den Verstelleinheiten 31, 32, 33, 35, 36, 37 in ihren jeweiligen Messpositionen positioniert und in ihren jeweiligen Messrichtungen ausgerichtet. Die Messköpfe 21, 22 werden zum Abtasten der Außenfläche 12 der während eines ersten Prüfdurchlaufs oben liegenden Seitenwand 11 in einer sich in axialer Richtung z erstreckenden Messrichtung ausgerichtet und in einer Messposition positioniert, in welcher der jeweilige Gesichtswinkel α der Messköpfe 21, 22 einen der im vorliegenden Fall acht Messabschnitte oder Sektoren, in welche die Außenfläche 12 gegliedert ist, komplett erfasst. Der Messkopf 23 hingegen wird zum Abtasten der Innenfläche 14 des Laufflächenabschnitts 15 in einer sich in der radialen Richtung r erstreckenden Messrichtung ausgerichtet und in einer Messposition positioniert, in welcher der Gesichtswinkel α des Messkopfs 23 einen der im vorliegenden Fall ebenfalls acht Messabschnitte, in welche die Innenfläche 14 gegliedert ist, komplett erfasst. Die Messabschnitte auf der Außenfläche 12 und der Innenfläche 14 werden sodann mittels der jeweiligen Beleuchtungseinheit der Messköpfe 21, 22, 23 beleuchtet. Die von der Oberfläche des Reifens 10 rückgestreuten Lichtbündel werden mittels eines Objektivs, das die Messköpfe 21, 22, 23 jeweils aufweisen, aufgenommen und auf das jeweilige Shearingelement der Messköpfe 21, 22, 23 abgebildet sowie mit Hilfe von diesem zur Interferenz gebracht. Die interferierenden Lichtbündel werden mittels des im Strahlengang des Shearingelements angeordneten Bildsensors der jeweiligen Kamera der Messköpfe 21, 22, 23 aufgenommen, um ein Interferogramm zu erzeugen. Die Messköpfe 21, 22, 23 sind mit einer nicht dargestellten Steuer- und Auswerteeinrichtung verbunden, die eine mehrkanalige Bildfangschaltung aufweist, um die von dem jeweiligen Bildsensor der Messköpfe 21, 22, 23 aufgenommenen Bilder, das heißt Interferogramme, simultan einzulesen. Die Interferogramme werden in der Steuer- und Auswerteeinrichtung verarbeitet, um beispielsweise aus unterschiedlichen Zuständen des Reifens 10, die sich aufgrund einer Änderung des Drucks in der Druckkammer 40 ergeben, ein die Verformung an der Oberfläche des Reifens 10 anzeigendes Shearogramm zu erstellen. Die Steuer- und Auswerteeinrichtung dient außerdem dazu, das Positionierungsmittel 30, die Drehvorrichtung 51 und den in der Druckkammer 40 herrschenden Druck zu steuern.

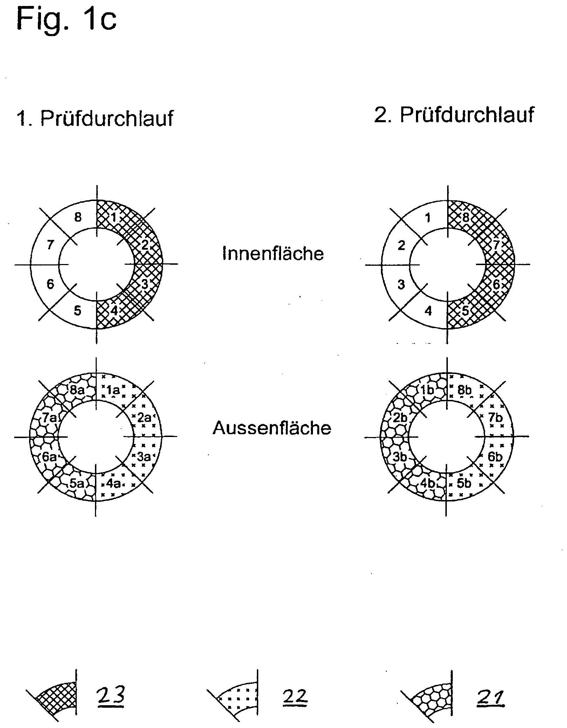

Wie Fig. 1c anschaulich zu erkennen gibt, werden während eines ersten Prüfdurchlaufs sämtliche Messabschnitte auf der Außenfläche 12 der oben liegenden Seitenwand 11 und die Hälfte der Messabschnitte auf der Innenfläche 14 des Laufflächenabschnitts 15 geprüft. Dabei werden auf der Außenfläche 12 die Messabschnitte 1a bis 4a von dem Messkopf 22 und die Messabschnitte 5a bis 8a von dem Messkopf 21 nacheinander abgetastet, wohingegen auf der Innenfläche 14 die Messabschnitte 1 bis 4 von dem Messkopf 23 nacheinander abgetastet werden. Um die ca. 45° großen Messabschnitte nacheinander abzutasten, wird der Reifen 10 intermittierend um die Rotationsachse R gedreht. Nach dem ersten Prüfdurchlauf ist die Außenfläche 12 der Seitenwand 11 vollständig und die Innenfläche 14 des Laufflächenabschnitts 15 zur Hälfte geprüft. Der Reifen 10 wird sodann gewendet. In dem sich anschließenden zweiten Prüfdurchlauf wird die Außenfläche 12 der dann oben liegenden Seitenwand 13 von den Messköpfen 21, 22 und die Innenfläche 14 des Laufflächenabschnitts 15 von dem Messkopf 23 abgetastet. Dabei werden auf der Außenfläche 12 die Messabschnitte 1b bis 4b von dem Messkopf 21 und die Messabschnitte 5b bis 8b von dem Messkopf 22 nacheinander geprüft. Der Messkopf 23 hingegen prüft nacheinander die Messabschnitte 5 bis 8 auf der Innenfläche 14, die während des ersten Prüfdurchlaufs nicht abgetastet worden sind. Nach Beendigung des zweiten Prüfdurchlaufs ist der Reifen 10 damit vollständig, dass heißt bead to bead, geprüft.

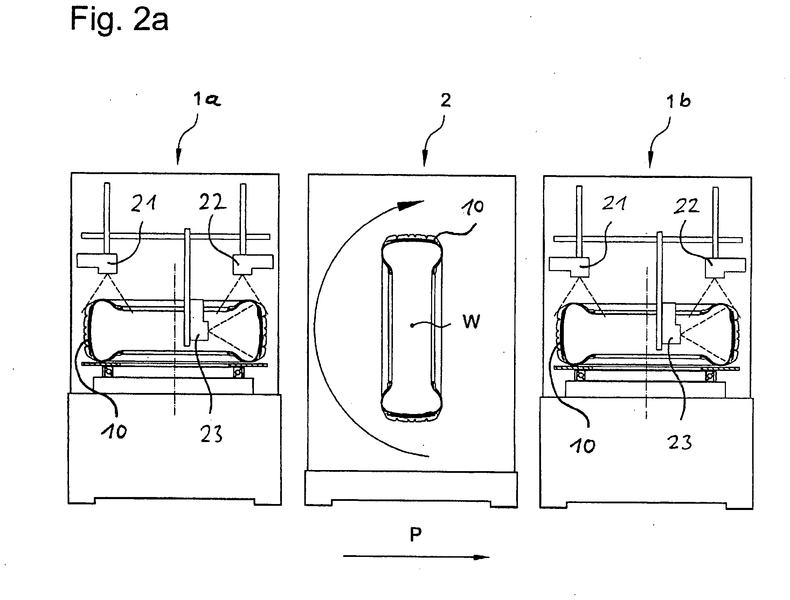

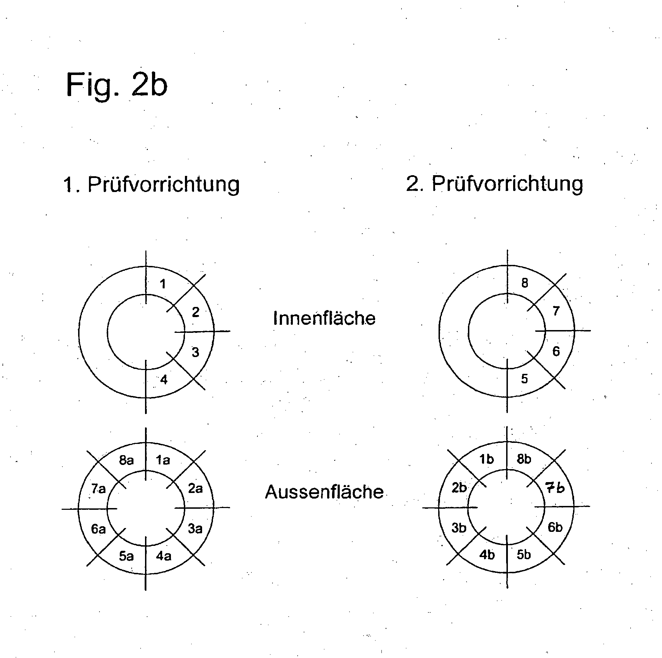

Die in Fig. 2a dargestellte Prüfanordnung weist zwei Prüfvorrichtungen 1a, 1b auf, die denselben Aufbau haben, wie die zuvor beschriebene Prüfvorrichtung 1 und die in einem Prüfablauf P hintereinander angeordnet sind. In dem Prüfablauf P ist zwischen den Prüfvorrichtungen 1a, 1b eine Wendevorrichtung 2 angeordnet, die es ermöglicht, den Reifen 10 um eine sich im vorliegenden Fall in horizontaler Richtung erstreckende Wendeachse W zu drehen, um den Reifen 10 zu wenden. Wie Fig. 2b zu erkennen gibt, wird der zuvor beschriebene erste Prüfdurchlauf auf der im Prüfablauf P ersten Prüfvorrichtung 1a durchgeführt, wohingegen der zweite Prüfdurchlauf auf der im Prüfablauf P zweiten Prüfvorrichtung 1b durchgeführt wird. Demzufolge prüfen die Messköpfe 21, 22, 23 der Prüfvorrichtung 1a die Messabschnitte 1a bis 8a auf der Außenfläche 12 der Seitenwand 11 und die Messabschnitte 1 bis 4 auf der Innenfläche 14 des Laufflächenabschnitts 15. Die Messköpfe 21, 22, 23 der Prüfvorrichtung 1b hingegen prüfen, nachdem der Reifen 10 durch die Wendevorrichtung 2 gewendet worden ist, die Messabschnitte 1b bis 8b auf der Außenfläche 12 der Seitenwand 13 und die Messabschnitte 5 bis 8 auf der Innenfläche 14 des Laufflächenabschnitts 15. Die Aufteilung der beiden Prüfdurchläufe auf die Prüfvorrichtungen 1a, 1b ermöglicht eine außerordentlich schnelle Reihenuntersuchung von Reifen 10.

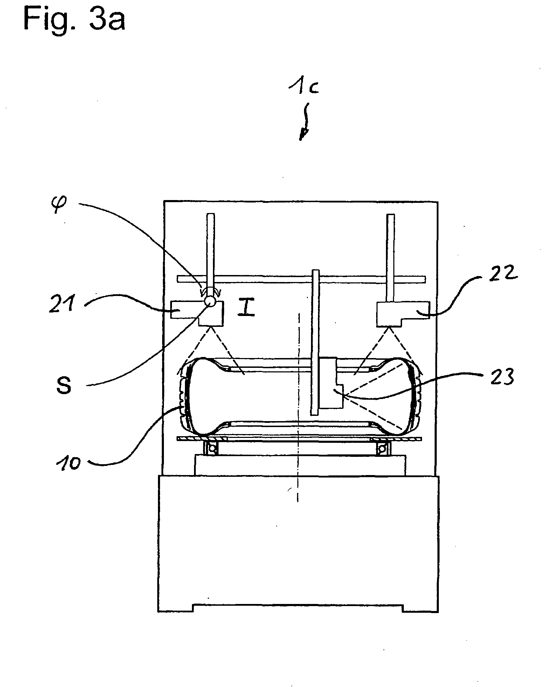

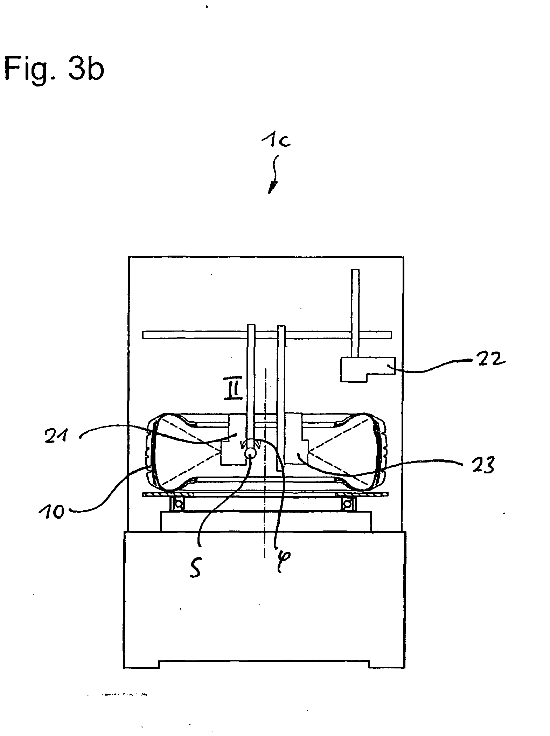

Die in den Fig. 3a und 3b dargestellte Prüfvorrichtung 1c unterscheidet sich von der Prüfvorrichtung 1 darin, dass der Messkopf 21 um eine Schwenkachse S drehbar gelagert ist. Die Messköpfe 22, 23 der Prüfvorrichtung 1c hingegen sind wie sämtliche Messköpfe 21, 22, 23 der Prüfvorrichtung 1 in Bezug auf die jeweilige Messrichtung starr angeordnet. Aufgrund der drehbaren Lagerung kann der Messkopf 21 um einen Verstellwinkel ϕ geschwenkt werden, der im vorliegenden Fall ca. 90° beträgt. Auf diese Weise ist es möglich, den Messkopf 21 zwischen einer ersten Messposition I, die in Fig. 3a gezeigt ist, und einer zweiten Messposition II, die in Fig. 3b gezeigt ist, zu schwenken. In der ersten Messposition I ist der Messkopf 21 in der axialen Richtung z ausgerichtet und ermöglicht demzufolge, die Außenfläche 12 der Seitenwände 11, 13 zu prüfen. In der zweiten Messposition II hingegen ist der Messkopf 21 in der radialen Richtung r ausgerichtet und ermöglicht demzufolge, die Innenfläche 14 des Laufflächenabschnitts 15 zu prüfen. Die schwenkbare Anordnung des Messkopfs 21 kommt vor allem dann zum Tragen, wenn der Reifen 10 nicht vollständig, sondern ausschließlich im Bereich des Laufflächenabschnitts 15 geprüft werden soll. Denn in diesem Fall können, wie in Fig. 3b dargestellt, die Messköpfe 21, 23 zusammen im Inneren des Reifens 10 angeordnet und diametral ausgerichtet werden, um den Laufflächenabschnitt 15 in einem einzigen Prüfdurchlauf simultan abzutasten.

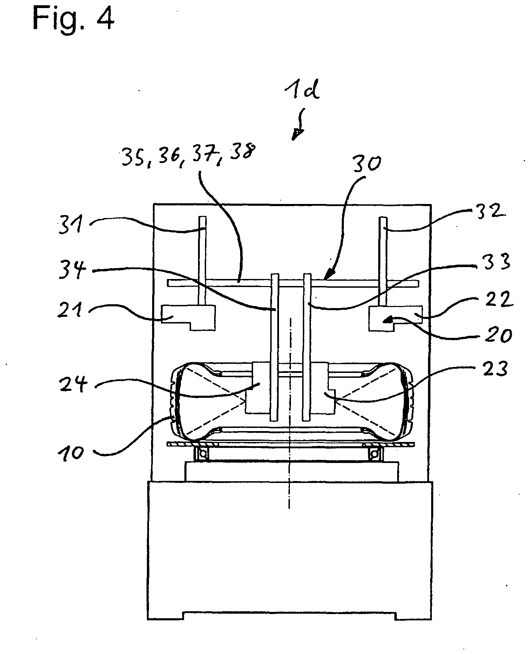

Die in Fig. 4 dargestellte Prüfvorrichtung 1d unterscheidet sich von der Prüfvorrichtung 1 vornehmlich darin, dass die Messeinrichtung 20 einen vierten Messkopf 24 aufweist. Darüber hinaus weist das Positionierungsmittel 30 zusätzlich eine axiale Verstelleinheit 34 und eine radiale Verstelleinheit 38 auf, um den Messkopf 24 in der gewünschten Messposition zu positionieren. Der Messkopf 24 verfügt über denselben Aufbau wie die Messköpfe 21, 22, 23 und ist in der radialen Richtung r diametral zu dem Messkopf 23 ausgerichtet. Auf diese Weise kann die Innenfläche 14 des Laufflächenabschnitts 15 durch die Messköpfe 23, 24 simultan abgetastet werden, um eine besonders schnelle Prüfung zu erreichen.

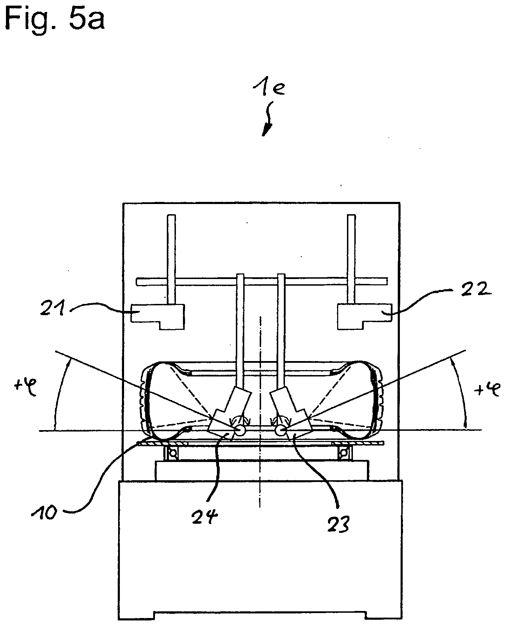

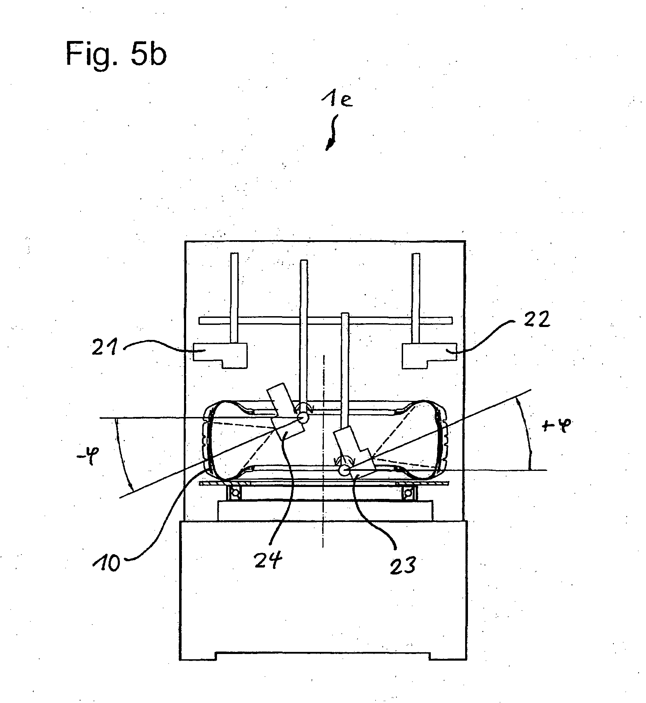

Die in den Fig. 5a und 5b gezeigte Prüfvorrichtung 1e unterscheidet sich von der Prüfvorrichtung 1d darin, dass die Messköpfe 23, 24 schwenkbar gelagert und damit um den Verstellwinkel ϕ gedreht werden können. Der Verstellwinkel ϕ beträgt im vorliegenden Fall ca. +/- 25° bezogen auf die in Fig. 1b gezeigte Reifenmittenebene E oder eine zu der Reifenmittenebene E parallelen Ebene. In Fig. 5a sind die Messköpfe 23, 24 jeweils nach oben geschwenkt und ermöglichen demzufolge einen Split-Crown-Shot auf den Laufflächenabschnitt 15 einschließlich der oben liegenden Schulter 16. In Fig. 5b ist der Messkopf 23 nach oben, der Messkopf 24 hingegen nach untern geschwenkt, sodass der Messkopf 23 einen Split-Crown-Shot auf den Laufflächenabschnitt 15 einschließlich der oberen Schulter 16 und der Messkopf 24 einen Split-Crown-Shot auf den Laufflächenabschnitt 15 einschließlich der unteren Schulter 16 durchführt. Die schwenkbare Anordnung der Messköpfe 23, 24 bietet sich vor allem dann an, wenn der zu prüfende Reifen 10 über eine vergleichsweise große Breite und/oder eine geringe Maulweite verfügt, sodass der Laufflächenabschnitt 15 bei einer Ausrichtung der Messköpfe 23, 24 in der radialen Richtung r nicht vollständig von dem Gesichtswinkel α der Messköpfe 23, 24 erfasst würde.

Die zuvor beschriebenen Ausführungsformen einer Vorrichtung zum Prüfen des Reifens 10 zeichnen sich dadurch aus, dass eine schnelle und vollständige Prüfung des Reifens 10 möglich ist. Die Prüfvorrichtungen 1, 1a, 1b, 1c weisen nur drei Messköpfe 21, 22, 23 auf und verfügen damit über eine optimale Ausgestaltung, um den Reifen 10 bei Durchführung des erfindungsgemäßen Verfahrens vollständig zu prüfen. Die über vier Messköpfe 21, 22, 23, 24 verfügenden Prüfvorrichtungen 1d, 1e ermöglichen ebenfalls, das erfindungsgemäße Verfahren durchzuführen, schaffen aber aufgrund des vierten Messkopfs 24 nicht nur eine zu einer hohen Ausfallsicherheit beitragende Redundanz, sondern ermöglichen bei Bedarf, die unterschiedlichsten Verfahrensführungen zu verwirklichen. Nicht zuletzt trägt die starre Anordnung der meisten der Messköpfe 21, 22, 23, 24 der Prüfvorrichtungen 1, 1a, 1b, 1c, 1d, 1e zu einer einfachen und kostengünstigen Ausgestaltung bei, die zu dem verschleiß- und wartungsarm ist.

**Bezugszeichenliste**

| | | | |
|---|---|---|---|
| 1 | Prüfvorrichtung | 32 | axiale Verstelleinheit |
| 1a | Prüfvorrichtung | 33 | axiale Verstelleinheit |
| 1b | Prüfvorrichtung | 34 | axiale Verstelleinheit |
| 1c | Prüfvorrichtung | 35 | radiale Verstelleinheit |
| 1d | Prüfvorrichtung | 36 | radiale Verstelleinheit |
| 1e | Prüfvorrichtung | 37 | radiale Verstelleinheit |
| | | 38 | radiale Verstelleinheit |
| 2 | Wendevorrichtung | 40 | Druckkammer |
| 10 | Reifen | | |
| 11 | Seitenwand | 50 | Untergestell |
| 12 | Außenfläche | 51 | Drehvorrichtung |
| 13 | Seitenwand | | |
| 14 | Innenfläche | E | Reifenmittenebene |
| 15 | Laufflächenabschnitt | P | Prüfablauf |
| 16 | Schulter | R | Rotationsachse |
| 17 | Wulst | S | Schwenkachse |
| 18 | Karkasse | W | Wendeachse |
| 19 | Gürtel | r | radiale Richtung |
| | | z | axiale Richtung |
| 20 | Messeinrichtung | | |
| 21 | Messkopf | α | Gesichtswinkel |
| 22 | Messkopf | ϕ | Verstellwinkel |
| 23 | Messkopf | I | Messposition |
| 24 | Messkopf | II | Messposition |
| 30 | Positionierungsmittel | | |
| 31 | axiale Verstelleinheit | | |

## Patentansprüche

1. Vorrichtung zum Prüfen eines Reifens (10), der eine erste Seitenwand (11), eine zweite Seitenwand (13) und einen Laufflächeriabschnitt (15) aufweist, die in eine Anzahl an Messabschnitte (1 bis 8; 1a bis 8a; 1b bis 8b) gliederbar sind, insbesondere mittels eines interferometrischen Messverfahrens, umfassend:
eine Messeinrichtung (20), durch die der Reifen (10) zum Erzeugen eines Messergebnisses abschnittsweise in einem Prüfdurchlauf abtastbar ist;
ein Untergestell (50), auf dem der Reifen (10) derart liegend lagerbar ist, dass die erste Seitenwand (11) in einem ersten Prüfdurchlauf oben liegt und nach einem Wenden des Reifens (10) die zweite Seitenwand (13) in einem zweiten Prüfdurchlauf oben liegt;
ein Positionierungsmittel (30) für die Messeinrichtung (20), das an dem Untergestell (50) abgestützt ist, und
eine Druckkammer (40), in welcher der Reifen (10) einem vorgegebenen Druck aussetzbar ist;
wobei der Reifen (10) relativ zu der Messeinrichtung (20) um eine sich in einer axialen Richtung (z) des Reifens (10) erstreckende Rotationsachse (R) intermittierend drehbar ist;
wobei die Messeinrichtung (20) umfasst:
wenigstens einen ersten Messkopf (21), der zum Abtasten der Außenfläche (12) der Seitenwände (11, 13) in einer ersten Messrichtung (z) ausrichtbar ist;
wenigstens einen zweiten Messkopf (22), der zum Abtasten der Außenfläche (12) der Seitenwände (11, 13) in einer zweiten Messrichtung (z) ausrichtbar ist, und
wenigstens einen dritten Messkopf (23), der zum Abtasten der Innenfläche (14) von zumindest dem Laufflächenabschnitt (15) in einer dritten Messrichtung (r) ausrichtbar ist;
wobei das Positionierungsmittel (30) wenigstens eine axiale Verstelleinheit (31, 32, 33), durch welche die Messköpfe (21, 22, 23) in der axialen Richtung (z) bewegbar sind, und wenigstens eine radiale Verstelleinheit (35, 36, 37), durch welche die Messköpfe (21, 22, 23) in der radialen Richtung (r) bewegbar sind, aufweist;
wobei der erste Messkopf (21) und der zweite Messkopf (22) durch das Positionierungsmittel (30) in der axialen Richtung (z) und in der radialen Richtung (r) derart bewegbar und jeweils in einer Messposition positionierbar sind, dass in dem ersten Prüfdurchlauf sämtliche Messabschnitte (1a bis 8a) auf der Außenfläche (12) der ersten Seitenwand (11) und in dem zweiten Prüfdurchlauf sämtliche Messabschnitte (1b bis 8b) auf der Außenfläche (12) der zweiten Seitenwand (13) abtastbar sind, und
wobei der dritte Messkopf (23) durch das Positionierungsmittel (30) in der axialen Richtung (z) und in der radialen Richtung (r) derart bewegbar und in einer Messposition positionierbar ist, dass in dem ersten Prüfdurchlauf eine Hälfte der Messabschnitte (1 bis 4) auf der Innenfläche (14) von zumindest dem Laufflächenabschnitt (15) und in dem zweiten Prüfdurchlauf die andere Hälfte der Messabschnitte (5 bis 8) auf der Innenfläche (14) von zumindest dem Laufflächenabschnitt (15) abtastbar ist.

2. Vorrichtung nach Anspruch 1, **dadurch gekennzeichnet, dass** die Messeinrichtung (20) einen vierten Messkopf (24) umfasst, der zum Abtasten der Innenfläche (14) von zumindest dem Laufflächenabschnitt (15) in einer vierten Messrichtung (r) ausrichtbar ist.

3. Vorrichtung nach Anspruch 1 oder 2, **dadurch gekennzeichnet, dass** die erste Messrichtung und die zweite Messrichtung in der axialen Richtung (z) des Reifens (10) verlaufen.

4. Vorrichtung nach einem der Ansprüche 1 bis 3, **dadurch gekennzeichnet, dass** die dritte Messrichtung und/oder die vierte Messrichtung in einer radialen Richtung (r) des Reifens (10) verlaufen und vorzugsweise entgegengesetzt orientiert sind.

5. Vorrichtung nach einem der Ansprüche 1 bis 4, **dadurch gekennzeichnet, dass** zumindest einer der Messköpfe (21, 22, 23, 24), vorzugsweise alle Messköpfe (21, 22, 23, 24), in Bezug auf die Messrichtung (r, z) starr angeordnet sind.

6. Vorrichtung nach einem der Ansprüche 1 bis 4, **dadurch gekennzeichnet, dass** zumindest einer der Messköpfe (21, 22, 23, 24), vorzugsweise alle Messköpfe (21, 22, 23, 24), um eine orthogonal zu der Messrichtung (r, z) verlaufende Schwenkachse (S) drehbar sind.

7. Vorrichtung nach Anspruch 6, **dadurch gekennzeichnet, dass** nur einer der Messköpfe (21, 22, 23, 24) um die Schwenkachse (S) drehbar ist.

8. Vorrichtung nach Anspruch 6 oder 7, **dadurch gekennzeichnet, dass** der Messkopf (21, 22, 23, 24) zwischen einer ersten Messposition (I) und einer zweiten Messposition (II) schwenkbar ist, wobei vorzugsweise der Messkopf (21, 22, 23, 24) entgegen der Wirkung einer Rückstellkraft von der ersten Messposition (I) in die zweite Messposition (II) schwenkbar ist.

9. Vorrichtung nach Anspruch 8, **dadurch gekennzeichnet, dass** der Messkopf (21, 22, 23, 24) in der ersten Messposition (I) in einer axialen Messrichtung (z) und in der zweiten Messposition (II) in einer radialen Messrichtung (r) ausgerichtet ist.

10. Vorrichtung nach Anspruch 8, **dadurch gekennzeichnet, dass** der Messkopf (21, 22, 23, 24) in der ersten Messposition (I) in einer radialen Messrichtung (r) und in der zweiten Messposition (II) in einer gegenüber der radialen Messrichtung (r) um einen Verstellwinkel (ϕ) geneigten Messrichtung ausgerichtet ist.

11. Vorrichtung nach Anspruch 10, **dadurch gekennzeichnet, dass** der Verstellwinkel (ϕ) zwischen 0° und +/- 30°, vorzugsweise zwischen 0° und +/- 15°, beträgt.

12. Vorrichtung nach einem der Ansprüche 1 bis 11, **dadurch gekennzeichnet, dass** die Druckkammer (40) an dem Untergestell (50) abgestützt ist.

13. Vorrichtung nach einem der Ansprüche 1 bis 12, **gekennzeichnet durch** wenigstens zwei axiale Verstelleinheiten (31, 32, 33, 34) und/oder wenigstens zwei radiale Verstelleinheiten (35, 36, 37, 38), die miteinander gekoppelt sind.

14. Vorrichtung nach einem der Ansprüche 1 bis 13, **dadurch gekennzeichnet, dass** die Messeinrichtung (20) relativ zu dem Reifen (10) um eine sich in der axialen Richtung (z) erstreckende Rotationsachse (R) drehbar ist.

15. Vorrichtung nach einem der Ansprüche 1 bis 14, **dadurch gekennzeichnet, dass** das Untergestell (50) mit einer Drehvorrichtung (51) versehen ist, durch die der Reifen (10) um die Rotationsachse (R) drehbar ist.

16. Vorrichtung nach einem der Ansprüche 1 bis 15, **dadurch gekennzeichnet, dass** die Messköpfe (21, 22, 23, 24) jeweils umfassen:
eine Beleuchtungseinheit, die geeignet ist, den Reifen (10) zu beleuchten;
ein Shearingelement, das geeignet ist, die von dem Reifen (10) rückgestreuten Lichtbündel zur Interferenz zu bringen, und
einen elektronischen Bildsensor, der im Strahlengang des Shearingelements angeordnet ist und geeignet ist, die interferierenden Lichtbündel aufzunehmen.

17. Vorrichtung nach einem der Ansprüche 1 bis 16, **gekennzeichnet durch** eine Steuer- und Auswerteeinrichtung zum Steuern der Messeinrichtung (20) und/oder des Positionierungsmittels (30) und/oder der Drehvorrichtung (51) und/oder des in der Druckkammer herrschenden Drucks und zum Auswerten des Messergebnisses.

18. Vorrichtung nach Anspruch 17, **dadurch gekennzeichnet, dass** die Steuer- und Auswerteeinrichtung eine Bildfangschaltung aufweist, durch welche die von dem Bildsensor der Messköpfe (21, 22, 23, 24) aufgenommenen Bilder eingelesen werden, wobei vorzugsweise die Bildfangschaltung geeignet ist, die Bilder simultan einzulesen.

19. Vorrichtung nach einem der Ansprüche 1 bis 18, **gekennzeichnet durch** ein Sicherheitsventil, das geeignet ist, einen übermäßigen, eine Verformung oder Beschädigung der Druckkammer (40) hervorrufenden Überdruck oder Unterdruck in der Druckkammer (40) zu vermeiden.

20. Prüfanordnung zum Prüfen eines Reifens (10), insbesondere mittels eines interferometrischen Messverfahrens, mit
wenigstens zwei Prüfvorrichtungen (1a, 1b) nach einem der Ansprüche 1 bis 19, die in einem Prüfablauf (P) hintereinander angeordnet sind, und
einer Wendevorrichtung (2), die geeignet ist, den Reifen (10) zu wenden;
wobei die Wendevorrichtung (2) in dem Prüfablauf (P) zwischen den Prüfvorrichtungen (1a, 1b) angeordnet ist.

## Claims

1. Device for testing a tyre (10) having a first side wall (11), a second sidewall (13) and a tread portion (15) which can be divided into a number of measurement sections (1 to 8; 1a to 8a; 1b to 8b), to be measured in particular by means of an interferometric measuring method, comprising:
a measuring device (20) by means of which the tyre (10) can be scanned section by section in a testing procedure in order to generate a measurement result;
a sub-frame (50) on which the tyre (10) can be positioned so that the upper sidewall (11) faces upwards in a first testing procedure and, following the turning of the tyre (10), that the second sidewall (13) faces upwards in a second testing procedure;
a positioning means (30) for the measuring device (20), which is supported on the sub-frame (50), and
a pressure chamber (40) in which the tyre (10) is subjected to a prescribed pressure;
wherein the tyre (10) can be intermittently turned relative to the measuring device (20) around an axis of rotation (R) extending in an axial direction (z) of the tyre (10);
wherein the measuring device (20) comprises:
at least one first measuring head (21) which can be aligned in a first measuring direction (z) for scanning the outer surface (12) of the sidewalls (11, 13);
at least one second measuring head (22) which can be aligned in a second measuring direction (z) for scanning the outer surface (12) of the sidewalls (11, 13), and
at least one third measuring head (23) which can be aligned in a third direction of measurement (r) for scanning the inner surface (14) of at least the tread portion (15);
wherein the positioning means (30) comprises least one axial adjustment unit (31, 32, 33) by means of which the measuring head (21, 22, 23) can be moved in the axial direction (z) and at least one radial adjustment unit (35, 36, 37) by means of which the measuring head (21, 22, 23) can be moved in the radial direction (r);
wherein the first measuring head (21) and the second measuring head (22) can be moved by the positioning means (30) in the axial direction (z) and in the radial direction (r) and can each be positioned in a measuring position such that in the first test procedure all the measurement sections (1a to 8a) on the outer surface (12) of the first sidewall (11) can be scanned and in the second testing procedure all the measurement sections (1b to 8b) on the outer surface (12) of the second sidewall (13) can be scanned, and
wherein the third measuring head (23) can be moved by the positioning means (30) in the axial direction (z) and in the radial direction (r) and positioned in a measuring position in such a way that in the first testing procedure one half of the measurement sections (1 to 4) on the inner surface (14) of at least the tread portion (15) can be scanned and in the second testing procedure the other half of the measurement sections (5 to 8) on the inner surface (14) of at least the tread portion (15) can be scanned.

2. Device according to claim 1, **characterised in that** the measuring device (20) comprises a fourth measuring head (24) which can be aligned in a fourth measuring direction (r) for scanning the inner surface (14) of at least the tread portion (15).

3. Device according to claim 1 or 2, **characterised in that** the first measuring direction and the second measuring direction are in an axial direction (z) of the tyre (10).

4. Device according to any one of the claims 1 to 3 **characterised in that** the third measuring direction and / or the fourth measuring direction are in a radial direction (r) of the tyre (10) and are preferably oppositely oriented.

5. Device according to any one of the claims 1 to 4, **characterised in that** at least one of the measuring heads (21, 22, 23, 24), preferably all the measuring heads (21, 22, 23, 24), are rigidly arranged with respect to the measuring direction (r, z).

6. Device according to any one of claims 1 to 4, **characterised in that** at least one of the measuring heads (21, 22, 23, 24), preferably all the measuring heads (21, 22, 23, 24), are rotatable around a swivel axis (S) which extends orthogonally to the measuring direction (r, z).

7. Device according to claim 6, **characterised in that** only one of the measuring heads (21, 22, 23, 24) is rotatable around the swivel axis (S).

8. Device according to claim 6 or 7, **characterised in that** the measuring head (21, 22, 23, 24) is rotatable between a first measuring position (I) and a second measuring position (II), wherein preferably the measuring head (21, 22, 23, 24) can be rotated from the first measuring position (I) into the second measuring position (II) against a restoring force.

9. Device according to claim 8, **characterised in that** the measuring head (21, 22, 23, 24) in the first measuring position (I) is oriented in an axial direction (z) and in the second measuring position (II) is oriented in a radial direction (r)

10. Device according to claim 8, **characterised in that** the measuring head (21, 22, 23, 24) in the first measuring position (I) is aligned in a radial direction of measurement (r) and in the second measuring position (II) is oriented in a measuring direction angled at an adjustment angle (ϕ) from the radial direction of measurement (r).

11. Device according to claim 10, **characterised in that** the adjustment angle (ϕ) has a magnitude between 0° and +/- 30°, preferably between 0° and +/- 15°.

12. Device according to any one of claims 1 to 11, **characterised in that** the pressure chamber (40) is mounted on the sub-frame (50).

13. Device according to any one of claims 1 to 12, **characterised by** at least two axial adjustment units (31, 32, 33, 34) and/or at least two radial adjustment units (35, 36, 37, 38) which are coupled to one another.

14. Device according to any one of the claims 1 to 13, **characterised in that** measuring device (20) can be rotated relative to the tyre (10) around a rotation axis (R) extending in the axial direction (z).

15. Device according to any one of the claims 1 to 14, **characterised in that** the sub-frame (50) is provided with a turning device (51) by means of which the tyre (10) is able to be turned around the rotational axis (R)

16. Device according to any one of the claims 1 to 15, **characterised in that** the measuring heads (21, 22, 23, 24) each comprises:
a lighting unit which is suitable for illuminating the tyre (10);
a shearing unit which is suitable for creating interference in the beams of light reflected from the tyre (10)
an electronic image sensor arranged in the path of the beams of the shearing unit and which is suitable for recording the interferometric light beams.

17. Device according to any one of the claims 1 to 16, **characterised by** a controlling and evaluating device for controlling the measuring device (20) and/or the positioning means (30) and/or the turning device (51) and/or the pressure prevailing in the pressure chamber, and for evaluating the measurement results.

18. Device according to claim 17, **characterised in that** the controlling and evaluating device is provided with a frame grabber facility by means of which the images recorded by the image sensor of the measuring heads (21, 22, 23, 24) are captured, wherein preferably the frame grabber is suited for capturing the images simultaneously.

19. Device according to any one of the claims 1 to 18, **characterised by** a safety valve which is suitable for averting any excessive over- or underpressure in the pressure chamber (40) which would result in a deformation or damaging of the pressure chamber (40).

20. Testing arrangement for testing a tyre (10), in particular by means of an interferometric measuring procedure with
at least two testing devices (1a, 1b) according to any one of claims 1 to 19 which are arranged one after the other in a testing sequence (P), and
a turning device (2) which is suitable for turning the tyre (10) over;
wherein the turning device (2) is arranged between the two test devices (1a, 1b) in the testing sequence (P).

## Revendications

1. Appareil pour contrôler un pneumatique (10) qui comprend une première paroi latérale (11), une seconde paroi latérale (13) et un tronçon formant bande de roulement (15), qui peuvent être organisés en un certain nombre de tronçons de mesure (1 à 8; 1a à 8a ; 1b à 8b), en particulier au moyen d'un procédé de mesure interférométrique, comprenant:
un dispositif de mesure (20) au moyen duquel le pneumatique (10) peut être palpé par tronçons dans une passe de contrôle afin d'engendrer un résultat de mesure ;
un châssis (50) sur lequel le pneumatique (10) peut être posé couché de telle façon que la première paroi latérale (11) se trouve en haut dans une première passe de contrôle et, après retournement du pneumatique (10), la seconde paroi latérale (13) se trouve en haut dans une seconde passe de contrôle ;
un moyen de positionnement (30) pour le dispositif de mesure (20), qui est supporté sur le châssis (50), et
une chambre à pression (40) dans laquelle le pneumatique (10) peut être soumis à une pression prédéterminée ;
dans lequel le pneumatique (10) peut être mis en rotation de façon intermittente par rapport au dispositif de mesure (20) autour d'un axe de rotation (R) qui s'étend en direction axiale (z) du pneumatique (10) ;
dans lequel le dispositif de mesure (20) comprend :
au moins une première tête de mesure (21) qui peut être orientée dans une première direction de mesure (z) pour palper la surface extérieure (12) des parois latérales (11, 13) ;
au moins une seconde tête de mesure (22) qui peut être orientée dans une seconde direction de mesure (z) pour palper la surface extérieure (12) des parois latérales (11, 13), et
au moins une troisième tête de mesure (23) qui peut être orientée dans une troisième direction de mesure (r) pour palper la surface intérieure (14) au moins du tronçon formant bande de roulement (15) ;
dans lequel les moyens de positionnement (30) comprennent au moins une unité de déplacement axial (31, 32, 33) au moyen de laquelle la tête de mesure (21, 22, 23) est déplaçable dans la direction axiale (z), et au moins une unité de déplacement radial (35, 36, 37) au moyen de laquelle la tête de mesure (21, 22, 23) est déplaçable dans la direction radiale (r) ;
dans lequel la première tête de mesure (21) et la seconde tête de mesure (22) pouvant être déplacées par le moyen de positionnement (30) dans la direction axiale (z) et dans la direction radiale (r) et pouvant être positionnées chacune dans une position de mesure de telle sorte que dans la première passe de contrôle la totalité des tronçons de mesure (1a à 8a) sur la surface extérieure (12) de la première paroi latérale (11) peuvent être palpés et, dans la seconde passe de contrôle la totalité des tronçons de mesure (1b à 8b) sur la surface extérieure (12) de la seconde paroi latérale (13) peuvent être palpés, et
dans lequel la troisième tête de mesure (23) pouvant être déplacée dans la direction axiale (z) et dans la direction radiale (r) et pouvant être positionnée dans une position de mesure par le moyen de positionnement (30) de telle façon que dans la première passe de contrôle une moitié des tronçons de mesure (1 à 4) sur la surface intérieure (14) au moins du tronçon formant bande de roulement (15) peuvent être palpés et, dans la seconde passe de contrôle l'autre moitié des tronçons de mesure (5 à 8) sur la surface intérieure (14) au moins du tronçon formant bande de roulement (15) peuvent être palpés.

2. Appareil selon la revendication 1, **caractérisé en ce que** le dispositif de mesure (20) comprend une quatrième tête de mesure (24) qui peut être orientée dans une quatrième direction de mesure (r) pour palper la surface intérieure (14) au moins du tronçon formant bande de roulement (15).

3. Appareil selon la revendication 1 ou 2, **caractérisé en ce que** la première direction de mesure et la seconde direction de mesure s'étendent dans la direction axiale (z) du pneumatique (10).

4. Appareil selon l'une des revendications 1 à 3, **caractérisé en ce que** la troisième direction de mesure et/ou la quatrième direction de mesure s'étendent dans une direction radiale (r) du pneumatique (10) et sont de préférence orientées en sens opposé.

5. Appareil selon l'une des revendications 1 à 4, **caractérisé en ce qu'**au moins une des têtes de mesure (21, 22, 23, 24), de préférence toutes les têtes de mesure (21, 22, 23, 24), sont agencées de manière rigide par rapport à la direction de mesure (r, z).

6. Appareil selon l'une des revendications 1 à 4, **caractérisé en ce qu'**au moins une des têtes de mesure (21, 22, 23, 24), de préférence toutes les têtes de mesure (21, 22, 23, 24) sont capables de tourner autour d'un axe de pivotement (S) qui s'étend perpendiculairement à la direction de mesure (r, z).

7. Appareil selon la revendication 6, **caractérisé en ce qu'**uniquement une des têtes de mesure (21, 22, 23, 24) est capable de tourner autour de l'axe de pivotement (S).

8. Appareil selon la revendication 6 ou 7, **caractérisé en ce que** la tête de mesure (21, 22, 23, 24) est capable de pivoter entre une première position de mesure (I) et une seconde position de mesure (II), et de préférence la tête de mesure (21, 22, 23, 24) est capable de pivoter à l'encontre de l'action d'une force de rappel de la première position de mesure (I) vers la seconde position de mesure (II).

9. Appareil selon la revendication 8, **caractérisé en ce que** la tête de mesure (21, 22, 23, 24) est orientée dans une direction de mesure axiale (z) dans la première position de mesure (I), et est orientée dans une direction de mesure radiale (r) dans la seconde position de mesure (II).

10. Appareil selon la revendication 8, **caractérisé en ce que** la tête de mesure (21, 22, 23, 24) est orientée dans une direction de mesure radiale (r) dans la première position de mesure (I) et est orientée dans une direction de mesure inclinée à raison d'un angle de décalage (ϕ) par rapport à la direction de mesure radiale (r) dans la seconde position de mesure (II).

11. Appareil selon la revendication 10, **caractérisé en ce que** l'angle de décalage (ϕ) est entre 0° et +/-30°, de préférence entre 0° et +/-15°.

12. Appareil selon la revendication 1 à 11, **caractérisé en ce que** la chambre à pression (40) est soutenus sur le châssis (50).

13. Appareil selon l'une des revendications 1 à 12, **caractérisé par** au moins deux unités de déplacement axial (31, 32, 33, 34) et/ou au moins deux unités de déplacement radial (35, 36, 37, 38) qui sont couplées les unes avec les autres.

14. Appareil selon l'une des revendications 1 à 13, **caractérisé en ce que** le dispositif de mesure (20) est capable de rotation par rapport au pneumatique (10) autour d'un axe de rotation (R) qui s'étend dans la direction axiale (z).

15. Appareil selon l'une des revendications 1 à 14, **caractérisé en ce que** le châssis (50) est pourvu d'un dispositif de rotation (51) au moyen duquel le pneumatique (10) peut être tourné autour de l'axe de rotation (R).

16. Appareil selon l'une des revendications 1 à 15, **caractérisé en ce que** les têtes de mesure (21, 22, 23, 24) comprennent chacune :
une unité d'éclairage qui est appropriée pour éclairer le pneumatique (10) ;
un élément de Shearing qui est approprié pour amener le faisceau lumineux renvoyé par le pneumatique (10) en interférence, et
un capteur d'images électronique qui est agencé dans le trajet des rayons de l'élément de Shearing et qui est approprié pour recevoir le faisceau lumineux en interférence.

17. Appareil selon l'une des revendications 1 à 16, **caractérisé par** une unité de commande et d'évaluation pour commander le dispositif de mesure (20) et/ou les moyens de positionnement (30) et/ou le dispositif de rotation (51) et/ou la pression régnant dans la chambre à pression, et pour évaluer le résultat de mesure.

18. Appareil selon la revendication 17, **caractérisé en ce que** l'unité de commande et d'évaluation comprend un circuit de capture d'images au moyen duquel les images prises par le capteur d'images des têtes de mesure (21, 22, 23, 24) sont lues, le circuit de capture d'images étant de préférence approprié pour lire les images simultanément.

19. Appareil selon l'une des revendications 1 à 18, **caractérisé par** une soupape de sécurité qui est appropriée pour éviter une surpression excessive ou une dépression excessive dans la chambre à pression (40) provoquant une déformation ou un endommagement de la chambre à pression (40).

20. Agencement de contrôle pour contrôler un pneumatique (10), en particulier au moyen d'un procédé de mesure interférométrique, comprenant
au moins deux appareils de contrôle (1a, 1b) selon l'une des revendications 1 à 19, qui sont agencés l'un derrière l'autre dans un processus de contrôle (P), et
un dispositif de retournement (2) qui est approprié pour retourner le pneumatique (10) ;
dans lequel le dispositif de retournement (2) est agencé entre les appareils de contrôle (1a, 1b) dans le processus de contrôle (P).
